# EUROPEAN PATENT APPLICATION

(11) **EP 3 846 466 A1**
(43) Date of publication of application: **07.07.2021**
(21) Application number: 19853636.9
(22) Date of filing: 28.08.2019
(51) Int. Cl.: H04N 13/117

(54) **VIDEO DATA PROCESSING AND TRANSMISSION METHODS AND APPARATUS, AND VIDEO DATA PROCESSING SYSTEM**

(30) Priority: 29.08.2018 CN 201810993340
(71) Applicant: ZTE Corporation, Shenzhen, Guangdong 518057 (CN)
(72) Inventor: HUANG, Cheng, Shenzhen, Guangdong 518057 (CN)
(74) Representative: Canzler & Bergmeier Patentanwälte Partnerschaft mbB
(86) International application number: PCT/CN2019/103045
(87) International publication number: WO 2020/043126

(57) **Abstract**

Provided in the present disclosure are video data processing and transmission methods and apparatus, and a video data processing system. The video data processing method comprises: playing back an omnidirectional video track that switches from a first viewpoint to a second viewpoint; and according to viewpoint information of the second viewpoint and/or the viewing direction of a user before switching from the first viewpoint, determining the initial viewing direction of the user when playing back the omnidirectional video track.

## Description

### TECHNICAL FIELD

The present disclosure relates to the field of video data processing and transmission.

### BACKGROUND

VR (Virtual Reality) is a technology that simulates and generates a 3D virtual world with computer technologies so that a user can experience a highly realistic virtual space in the aspects of vision, hearing, touch, and the like. With the rapid development of VR technologies, applications of VR videos (also called omnidirectional videos) such as on-demand and live broadcast are more and more extensive, and immersive video service and experience are brought to users.

For the same scene typically, a plurality of omnidirectional videos may be taken at different physical positions (viewpoints), referred to as multi-view omnidirectional videos. The multi-viewpoint omnidirectional video allows a user to switch between a plurality of omnidirectional videos based on positional information of different viewpoints. However, since there is overlapping contents between omnidirectional videos taken from continuous viewpoints, if there is no correlation between contents of a user viewport before the viewpoint switched and contents of an initial viewport after the viewpoint switched, the user may feel uncomfortable due to a sudden change of contents in the viewports before and after the viewpoint switched.

In view of the above problems in the related art, no effective solution has been found yet.

### SUMMARY

Embodiments of the present disclosure provide video data processing and transmission methods and apparatuses, and a video data processing system.

According to an embodiment of the disclosure, there is provided a video data processing method, including: playing an omnidirectional video track of a second viewpoint switched from a first viewpoint; determining, according to viewpoint information of the second viewpoint and /or a viewing orientation of a user before switched from the first viewpoint (before the first viewpoint is switched to the second viewpoint), an initial viewing orientation of the user when the omnidirectional video track is played.

According to another embodiment of the disclosure, there is provided a video data transmission method, including: receiving a media presentation description file, wherein the media presentation description file includes a viewpoint descriptor being configured to indicate viewpoint information of an omnidirectional video; selecting a viewpoint for playing the omnidirectional video and requesting for an omnidirectional video file corresponding to the viewpoint based on the viewpoint descriptor; wherein the viewpoint includes: a viewpoint of an omnidirectional video track in the omnidirectional video file, and viewpoint information of the viewpoint and /or a viewing orientation of a user before switched from the viewpoint are used to determine an initial viewing orientation of the user when the omnidirectional video track is played of the omnidirectional video.

According to another embodiment of the disclosure, there is provided a video data processing apparatus, including: a playing module configured to play an omnidirectional video track of a second viewpoint switched from a first viewpoint; and a determining module configured to determine, according to viewpoint information of the second viewpoint and /or a viewing orientation of a user before switched from the first viewpoint, an initial viewing orientation of the user when the omnidirectional video track is played.

According to another embodiment of the disclosure, there is provided a video data transmission apparatus, including: a receiving module, configured to receive a media presentation description file, wherein the media presentation description file includes a viewpoint descriptor being configured to indicate viewpoint information of an omnidirectional video; a requesting module, configured to select a viewpoint for playing the omnidirectional video and request for an omnidirectional video file corresponding to the viewpoint based on the viewpoint descriptor; wherein the viewpoint includes: a viewpoint of an omnidirectional video track in the omnidirectional video file, and viewpoint information of the viewpoint and /or a viewing orientation of a user before switched from the viewpoint are used to determine an initial viewing orientation of the user when the omnidirectional video track of the omnidirectional video is played.

According to another embodiment of the disclosure, there is provided a video data processing system, including: an omnidirectional video data processing server, and an omnidirectional video data processing terminal applied in the methods as described above; wherein the omnidirectional video data processing server is configured to produce the omnidirectional video collected from a plurality of viewpoints, generate viewpoint information of the omnidirectional video, and encapsulate the viewpoint information of the omnidirectional video in one or more media files or one or more pieces of index information; and the omnidirectional video data processing terminal is configured to transmit the omnidirectional video, decapsulate the omnidirectional video to extract viewpoint information of the plurality of viewpoints, and play a processed omnidirectional video.

According to still another embodiment of the disclosure, there is further provided a storage medium having a computer program stored thereon, wherein the computer program is configured to be executed to cause steps of any one of the above method embodiments to be implemented.

According to still another embodiment of the disclosure, there is further provided an electronic apparatus, including a memory and a processor, wherein the memory has a computer program stored thereon, and the processor is configured to execute the computer program to implement steps of any of the method embodiments as described above.

### BRIEF DESCRIPTION OF THE DRAWINGS

The drawings described herein are intended to provide a further understanding of the present disclosure, and are intended to be a part of the present disclosure. The exemplary embodiments of the present disclosure and the description thereof are for explaining the present disclosure and do not constitute an undue limitation of the present disclosure. In the drawings:
FIG. 1 is a block diagram showing a hardware structure of a mobile terminal for a video data processing method according to an embodiment of the present disclosure;
FIG. 2 is a flowchart of a video data processing method according to an embodiment of the present disclosure;
FIG. 3 is a schematic diagram of viewpoint group box in projected omnidirectional video tracks according to an embodiment of the present disclosure;
FIG. 4 is a schematic diagram showing a dynamic viewpoint timed metadata track referencing a viewpoint track group of an omnidirectional video according to an embodiment of the present disclosure;
FIG. 5 is a schematic diagram of another video data processing method according to an embodiment of the present disclosure;
FIG. 6 is a schematic diagram of a common reference coordinate system according to an embodiment of the disclosure;
FIG. 7 is a schematic diagram of still another video data processing method according to an embodiment of the disclosure;
FIG. 8 is a flowchart of a video data transmission method according to an embodiment of the present disclosure;
FIG. 9 is a flowchart of an omnidirectional video data transmission method according to an embodiment of the disclosure;
FIG. 10 is a flowchart of a video data processing method according to an embodiment of the present disclosure;
FIG. 11 is a structural block diagram of a video data processing apparatus according to an embodiment of the present disclosure;
FIG. 12 is a structural block diagram of a video data transmission apparatus according to an embodiment of the present disclosure;
FIG. 13 is a structural block diagram of a video data processing system according to an embodiment of the present disclosure; and
FIG. 14 is a structural block diagram of another video data processing system according to an embodiment of the present disclosure.

### DETAILED DESCRIPTION

The disclosure will be described in detail below with reference to the drawings in conjunction with the embodiments. It should be noted that the embodiments of the disclosure and features therein may be combined with each other in any manner as long as they are not contradictory.

It should be also noted that terms "first", "second", and the like in the description, claims and drawings of the disclosure are used for the purpose of distinguishing similar objects instead of indicating a specific order or sequence.

### Embodiment 1

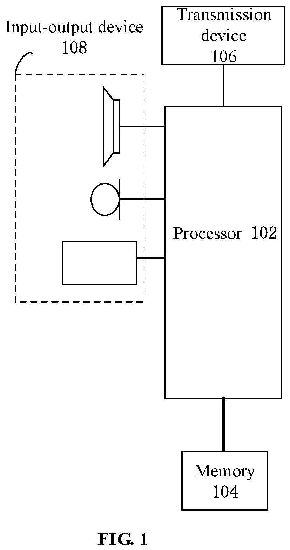

The method embodiment provided in Embodiment 1 of the present disclosure may be implemented in a mobile terminal, a computer terminal or similar computing devices. Taking the example of running on a mobile terminal, FIG. 1 is a block diagram showing a hardware structure of a mobile terminal for a video data processing method according to an embodiment of the present disclosure. As shown in FIG. 1, a mobile terminal 10 may include one or more (only one is shown in FIG. 1) processors 102 (which may include, but are not limited to, micro processor units (MCUs), programmable logic devices such as FPGAs or other processing devices), and a memory 104 configured to store data, and in some examples, the mobile terminal may further include a transmission device 106 for communication functions and an input-output device 108. It will be understood by those having ordinary skill in the art that the structure shown in FIG. 1 is merely illustrative, and does not form any limitation to the structure of the above mobile terminal. For example, the mobile terminal 10 may include more or fewer components than those shown in FIG. 1, or have a different configuration than that shown in FIG. 1.

The memory 104 may be configured to store a computer program, for example, a software program of application software and a module, such as a computer program corresponding to the video data processing method in the embodiment of the present disclosure. The processor 102 executes the computer program stored in the memory 104 to perform various functional applications and data processing, that is, implement the above method. The memory 104 may include a high speed random access memory, and may also include a non-volatile memory such as at least one magnetic storage device, flash memory, or other non-volatile solid state memory. In some examples, the memory 104 may further include a memory remotely located relative to the processor 102, which may be connected to the mobile terminal 10 via a network. Examples of such networks include, but are not limited to, the Internet, intranets, local area networks, mobile communication networks, and combinations thereof.

The transmission device 106 is configured to receive or transmit data via a network. Specific examples of such networks may include a wireless network provided by a communication provider of the mobile terminal 10. In an example, the transmission device 106 includes a Network Interface Controller (NIC) that may be connected to another network device through a base station to communicate with the Internet. In an example, the transmission device 106 may be a Radio Frequency (RF) module configured to communicate with the Internet wirelessly.

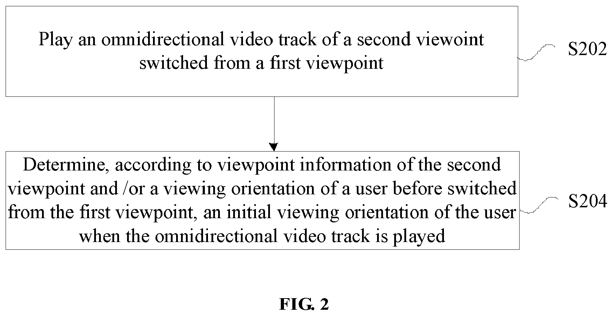

In this embodiment, a video data processing method running on the mobile terminal is provided. FIG. 2 is a flowchart of a video data processing method according to an embodiment of the present disclosure. As shown in FIG. 2, the flow includes the following steps S202 and S204.

At step S202, playing an omnidirectional video track of a second viewpoint switched from a first viewpoint.

In other words, in step S202, an omnidirectional video track corresponding to the second viewpoint is played, and the second viewpoint is switched from the first viewpoint; that is, an omnidirectional video track switched from a first viewpoint to a second viewpoint is played.

At step S204, determining, according to viewpoint information of the second viewpoint and /or a viewing orientation of a user before switched from the first viewpoint, an initial viewing orientation of the user when the omnidirectional video track is played.

In other words, in this embodiment, the omnidirectional video track corresponding to the second viewpoint is played based on a recommended initial viewing orientation which is an "initial viewing orientation of the user". The recommended initial viewing orientation is determined based on the viewpoint information of the second viewpoint and /or a viewing orientation of the user when he/she views the omnidirectional video track corresponding to the first viewpoint.

It should be noted that the above steps S202 and S204 are not necessarily performed in sequence, but may also be performed simultaneously, or in reverse order.

According to the embodiment, since the initial viewing orientation of the user is determined according to the switched viewpoint information and /or the switched viewpoint direction, the problem that the user may feel uncomfortable due to a sudden change of contents in the viewports before and after the viewpoint switched in the related art may be solved, achieving the effect of improving viewing experience of the user.

It should be noted that, in this embodiment, one implementation is to store the omnidirectional video data in a file based on an ISO (International Organization for Standardization) basic media file format. Among them, the ISO Base Media File Formats such as a restricted scheme information box, a track reference box, a track group box, and the like may be operated with reference to the MPEG-4 Part 12 ISO Base Media File Format established by the Moving Picture Experts Group (MPEG) of ISO/IEC JTC1/SC29/WG11. The projection, encapsulation steps and basic formats of the omnidirectional video may be operated with reference to the MPEG-I Part 2 OMAF (omnidirectional media format) established by the Motion Picture Experts Group (MPEG) of ISO/IEC JTC1/SC29/WG11.

In addition, all data in the ISO base media file format is contained in a box (Box), that is, the ISO base media file format represented by MP4 is composed of a plurality of boxes, each of which has a type and a length and may be regarded as one data object. One box may contain another box, referred to as a container box. An MP4 file will firstly have, and only have, one box of the "ftyp" type, which serves as a flag of the file format and contains some information about the file. Secondly, one and only one box of the "MOOV" type (Movie Box) is present, which is a container box whose sub-boxes contain metadata information of the media. Media data of the MP4 file is contained in a box of the "mdat" type (Media Data Box), which is also a container box, and there may be a plurality of them or none (when the media data all reference other files), and the structure of the media data is described by metadata.

Again, a timed metadata track is a mechanism in the ISO base media file format (ISOBMFF) to establish timed metadata associated with a particular sample. The timed metadata is less coupled to the media data and is typically "descriptive".

In some examples, the viewpoint information of the second viewpoint is determined based on a viewpoint group box in the omnidirectional video track.

In some examples, the viewpoint group box in the omnidirectional video track is identified based on a specified track group type; wherein viewpoint group boxes of omnidirectional video tracks belonging to the same viewpoint have the same track group identity.

In other words, the same track group type corresponds to the same track group identity. Viewpoint group boxes of omnidirectional video tracks belonging to the same viewpoint have the same track group identity and the same track group type.

Specifically, all the omnidirectional video tracks belonging to the same viewpoint may constitute a track group corresponding to the viewpoint by including a specific type of a track group box (Track Group Box). The viewpoint group box (ViewpointGroupBox) is explained below with reference to optional implementations.

### ViewpointGroupBox

| | |
|---|---|
| Box Type: | 'vwpt' |
| Container: | TrackBox |
| Mandatory: | No |
| Quantity: | Zero or one |

A track group type box(TrackGroupTypeBox) with a track group type (track_group_type) equal to 'vwpt' is a viewpoint group box, in which all the omnidirectional video tracks with the same track group id (track_group id) value belong to the same viewpoint. The track group id of the viewpoint group box may also be used as a viewpoint identity (viewpoint_id), and track group id corresponding to different viewpoints should take different values.

By default, if there is no track in the file carrying this viewpoint track group (viewpoint group box), the file content is considered to correspond to (belong to) the same viewpoint.

```
     Grammar
     aligned(8) class ViewpointGroupBox extends TrackGroupTypeBox('vwpt') {
        ViewpointInfoStruct();
        string viewpoint_label;
        unsigned int(16) viewpoint_id;
        unsigned int(8) viewpoint type;
     }
     Semantics
```

ViewpointInfoStruct(), referring to the structural syntactic definition of viewpoint information above , indicates viewpoint information of the viewpoint corresponding to the viewpoint group;
viewpoint_lable represents a label of a viewpoint, and is a null-terminated UTF-8 character string that provides text description of the viewpoint corresponding to the track group;
viewpoint_id represents an identity of the viewpoint corresponding to the track group; and
viewpoint_type represents a type of the viewpoint corresponding to the track group, as shown in Table 1:

**Table 1**

| Value | Description |
|---|---|
| 0 | Real viewpoint formed by actual shooting of physical camera |
| 1 | Virtual viewpoint synthesized by video data of other real viewpoints and auxiliary information such as depth and the like |
| 2-239 | Reserved |
| 240-255 | Undefined |

track_group_type indicates a track group type that should be set to one of the following values:
'vwpt': indicating that the track belongs to the viewpoint group. In a track group type box (TrackGroupTypeBox) where track_group_type is equal to 'vwpt', all tracks having the same track_group_id value belong to the same viewpoint.

In a video file, if there is a restricted scheme information box and a scheme type (scheme_type) parameter of a scheme type box therein is equal to 'podv' (projected omnidirectional video), it indicates that the video file adopts a projected omnidirectional video scheme, containing a projected omnidirectional video track. The projected omnidirectional video track may contain a track group box with a track group type (track_group_type) equal to 'vwpt', i.e., viewpoint group box (ViewpointGroupBox). The contained in the projected omnidirectional video track will be explained below in conjunction with optional implementations.

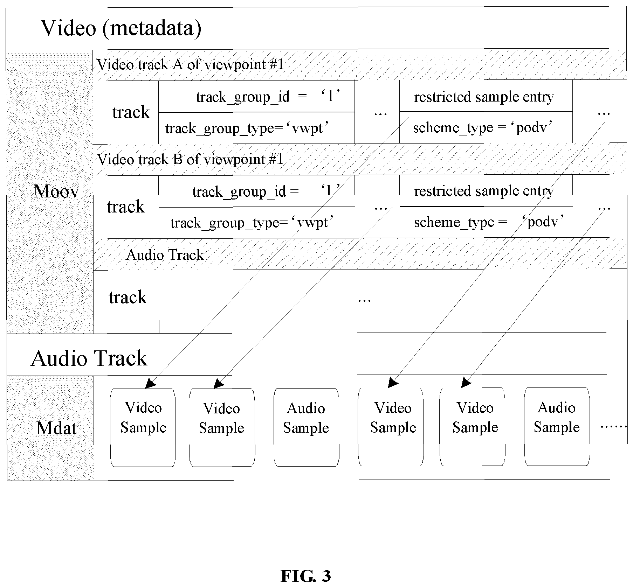

FIG. 3 is a schematic diagram of viewpoint group box in projected omnidirectional video track according to an embodiment of the present disclosure. As shown in FIG. 3, the projected omnidirectional video tracks A and B include track group boxes with a track group type (track_group_type) equal to 'vwpt', respectively, i.e., viewpoint group box, and their respective viewpoint group boxes have the same track group id (track_group id) value, indicating that the video tracks A and B constitute a viewpoint group belonging to (corresponding to) the same viewpoint (Viewpoint # 1).

In some examples, the viewpoint information of the second viewpoint is determined based on a dynamic viewpoint timed metadata track.

In some examples, the dynamic viewpoint timed metadata track is identified based on a first sample entry type, the dynamic viewpoint timed metadata track indicating dynamically changing viewpoint information of the omnidirectional video track.

In other words, the dynamic viewpoint timed metadata track has a first sample entry type, and when the dynamic viewpoint timed metadata track is identified based on the first sample entry type, the viewpoint information of the second viewpoint may be determined based on the dynamic viewpoint timed metadata track.

In some examples, the first sample entry type is 'dyvp'.

The dynamic viewpoint timed metadata indicates the viewpoint information that dynamically changing over time. The use of the dynamic viewpoint timed metadata track is indicated by the track sample entry type. The sample entry type of the dynamic viewpoint timed metadata track is 'dyvp', and defined as follows:

```
     class DynamicViewpointSampleEntry extends
     MetaDataSampleEntry('dyvp') {
        ViewpointPosStruct();
        unsigned int(16) viewpoint_id;
        string viewpoint_label;
        unsigned int(8) viewpoint_type;
        unsigned int(1) dynamic_gcs_rotation_flag;
        if(dynamic_gcs_rotation_flag == 0) {
             ViewpointGlobalCoordinate SysRotation Struct();
        }
     }
```

ViewpointPosStruct(), referring to the structural syntactic definition of viewpoint information above, indicates an initial viewpoint position of the dynamic viewpoint;
viewpoint_id represents the viewpoint identity associated with all samples referencing the sample entry;
viewpoint_lable represents a label of a viewpoint, and is a null-terminated UTF-8 character string that provides text description of the viewpoint;
viewpoint_type represents a type of the dynamic viewpoint, as shown in Table 2:

**Table 2**

| Value | Description |
|---|---|
| 0 | Real viewpoint formed by actual shooting of physical camera |
| 1 | Virtual viewpoint synthesized by video data of other real viewpoints and auxiliary information such as depth and the like |
| 2-239 | Reserved |
| 240-255 | Undefined |

dynamic_gcs_rotation_flag, in a case of being equal to 0, indicates that yaw, pitch and roll rotation angles on the X, Y, Z axes in the global coordinate system relative to the coordinate axes of the common reference coordinate system of the viewpoint remain unchanged in all samples referencing the sample entry; and in a casebeing equal to 1, indicates that yaw, pitch and roll rotation angles on the X, Y, Z axes in the global coordinate system relative to the coordinate axes of the common reference coordinate system of the viewpoint are defined in samples referencing the sample entry; and
ViewpointGlobalCoordinateSysRotationStruct(), referring to the structural syntactic definition of viewpoint information above, represents the yaw, pitch and roll rotation angles of the global coordinate system of the viewpoint associated with each sample referencing the sample entry relative to the X, Y and Z axes of the common reference coordinate system.

The dynamic viewpoint timed metadata track sample format is explained below with reference to optional implementations.

```
     aligned(8) DynamicViewpointSample() {
        ViewpointInfoStruct(dynamic_gcs_rotation_flag);
     }
```

ViewpointInfoStruct(), referring to the structural syntactic definition of viewpoint information as described above, indicates viewpoint information of the viewpoint corresponding to the dynamic viewpoint timed metadata track, and follows the following constraints:
in the viewpoint information structure of a first sample of the dynamic viewpoint timed metadata track, group_alignment_flag shall take the value of 1. For subsequent samples, if the viewpoint group information of a sample remains unchanged, the sample may not contain ViewpointGroupStruct(), and then it is inferred in a decoding order that it has the same ViewpointGroupStruct() as a previous sample.

Through a track reference box (Track Reference Box) with a reference_type of 'cdsc', the dynamic viewpoint timed metadata track may reference track identities of one or more omnidirectional video tracks.

Through a track reference box (Track Reference Box) with a reference type of 'cdsc', the dynamic viewpoint timed metadata track may reference track group id (track_group_id) of a viewpoint group whose track group type (track_group_type) is equal to 'vwpt'.

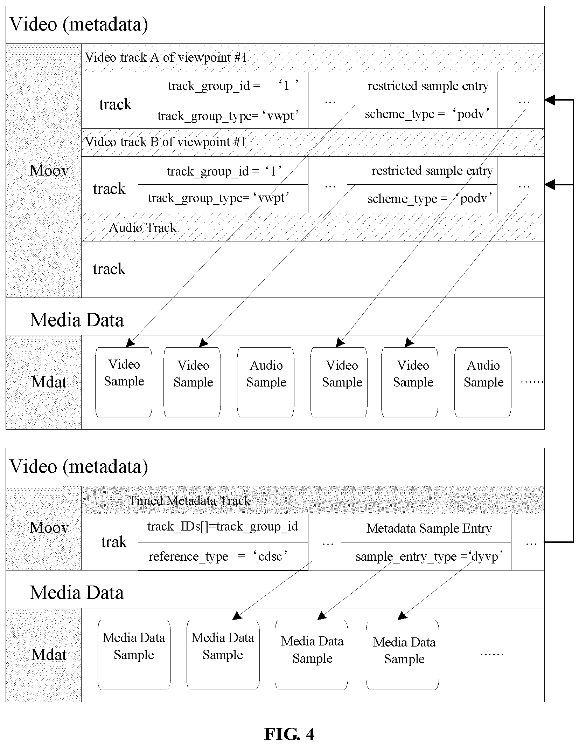

FIG. 4 is a schematic diagram showing a dynamic viewpoint timed metadata track referencing a viewpoint track group of an omnidirectional video according to an embodiment of the present disclosure.

As shown in FIG. 4, a track reference box (Track Reference Box) is included in a dynamic viewpoint timed metadata video track with a sample entry type equal to 'dyvp', and a track (track_IDs[]) parameter in the track reference box provides the referenced track id, or the referenced track group id. A reference _type parameter in the track reference box takes the value 'cdsc', indicating that the timed metadata track contains content description information of the referenced track by track IDs(track_IDs[]). In this embodiment, the dynamic viewpoint timed metadata video track references track group identities of the viewpoint group with a track group type (track_grouptype) equal to 'vwpt' in different files, providing dynamic viewpoint information of the omnidirectional video tracks A and B contained in the viewpoint group.

In some examples, the viewpoint information of the second viewpoint includes at least one of: a 3D space position of a viewpoint, a GPS position of a viewpoint, a global coordinate system rotation direction of a viewpoint, a viewpoint group, an identity of a viewpoint, a label of a viewpoint, and a type of a viewpoint.

For the restricted video sample entry type 'resv', the projected omnidirectional video scheme is used to indicate that the decoded image is an encapsulated image containing monocular or binocular stereoscopic contents. If a scheme type (scheme_type) parameter of a scheme type box in a restricted scheme information box (RestrictedSchemeInfoBox) is equal to 'podv', it indicates that the projected omnidirectional video scheme is adopted.

A format of the projected omnidirectional video image is represented by a projected omni video box(ProjectedOmniVideoBox) contained in a scheme information box (SchemeInformationBox). When the scheme _type is 'podv', there is one and only one projected omni video box in the scheme information box.

The viewpoint information of the projected omnidirectional video track includes at least one of:
a 3D space position of a viewpoint, including: an X-axis coordinate, a Y-axis coordinate and a Z-axis coordinate of the viewpoint;
a GPS position of a viewpoint, including: a longitude coordinate, a latitude coordinate and a elevation coordinate of the viewpoint;
a global coordinate system rotation direction of a viewpoint, including: yaw, pitch and roll angles on X, Y and Z axes in the global coordinate system relative to a common reference coordinate system of the viewpoint;
information of a viewpoint group, including: a viewpoint group identity and viewpoint group description.

Viewpoint information structure (ViewpointInfoStruct) provides viewpoint information of the above projected omnidirectional video track, including a position of the viewpoint, rotation angles on the X, Y and Z coordinate axes in the global coordinate system relative to the common reference coordinate system (each global coordinate) of the viewpoint. The definition is as follows:

```
     ViewpointInfoStruct
     aligned(8) ViewpointInfoStruct(gcs_rotation_flag) {
    ViewpointPosStruct();
    if(gcs_rotation_flag)
       ViewpointGlobalCoordinateSysRotationStruct();
    unsigned int(1) group_alignment_flag;
    bit(7) reserved = 0;
    if(group_alignment_flag) {
        ViewpointGroupStruct();
 }
    aligned(8) ViewpointPosStruct() {
    signed int(32) pos_x;
    signed int(32) pos_y;
    signed int(32) pos_z;
    unsigned int(1) gpspos_present_flag;
    bit(31) reserved = 0;
    if(gpspos_present_flag){
        signed int(32) gpspos_longitude;
        signed int(32) gpspos_latitude;
        signed int(32) gpspos_altitude;
    }
 }
    aligned(8) class ViewpointGlobalCoordinateSysRotationStruct() {
    signed int(32) gcs_yaw;
    signed int(32) gcs_pitch;
    signed int(32) gcs_roll;
 }
 aligned(8) class ViewpointGroupStruct() {
    unsigned int(8) group id;
    string group_description;
 }
```

The specific semantics are as follows:
pos x, pos_y and pos z specify Cartesian coordinate values for a 3D space position of the viewpoint in a common reference coordinate system centered at (0, 0, 0). For a dynamic viewpoint, an initial viewpoint position of the dynamic viewpoint is specified;
gpspos_present_flag indicates whether a flag bit for a GPS position of the viewpoint is present, which, in a case of being equal to 1, indicates a GPS position of the viewpoint is present, and in a case of being equal to 0, indicates a GPS position of the viewpoint is not present;
gppos longitudinal, gppos latitude and gppos_elevation respectively indicate longitude coordinate, latitude coordinate and elevation coordinate for the GPS position of the viewpoint;
gcs_rotation_flag, in a case of being equal to 1, indicates that rotation angles on the X, Y and Z coordinate axes in the global coordinate system relative to the common reference coordinate system of the viewpoint, i.e., gcs_yaw, gcs_pitch and gcs roll, are present, and in a case of being equal to 0, indicates that gcs_yaw, gcs_pitch, and gcs roll are not present;
gcs_yaw, gcs_pitch and gcs_roll respectively specify the yaw, pitch and roll angles of a rotation direction on the X, Y and Z axes in the global coordinate system relative to the coordinate axes in the common reference coordinate system of the viewpoint;
group_alignment_flag, in a case of being equal to 1, indicates that ViewpointGroupStruct is present and the viewpoint belongs to an independent coordinate system (and origin of coordinates), and in a case of being equal to 0, indicates that the viewpoint belongs to the common reference coordinate system;
group id is a unsigned integer value represents an identity of a viewpoint group, in which all viewpoints share a common reference coordinate system; and
group_description is a null-terminated UTF-8 character string, and provides description of a viewpoint group.

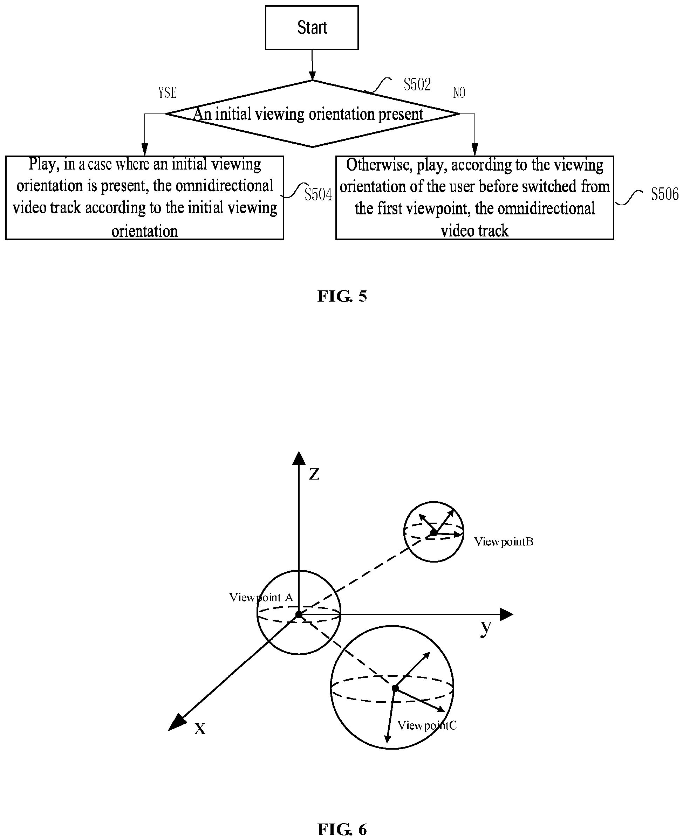

FIG. 5 is a schematic diagram of another video data processing method according to an embodiment of the present disclosure. As shown in FIG. 5, the flow includes the following steps S502, S504 and S506.

At step S502, judging whether an initial viewing orientation is present.

In other words, it is judged whether a recommended initial viewing orientation is present.

At step S504, playing, in a case where an initial viewing orientation is present, the omnidirectional video track according to the initial viewing orientation.

At step S506, otherwise, playing, according to the viewing orientation of the user before switched from the first viewpoint, the omnidirectional video track.

In this process, it may be determined first whether a recommended initial viewing orientation for playing the omnidirectional video track after the viewpoint switched is present (e.g., based on the viewpoint information of the second viewpoint or the initial viewing orientation timed metadata track as described below to determine), and when no recommended initial viewing orientation is present, the omnidirectional video track is played according to the same viewing orientation of the user as in the first viewpoint before switching.

In some examples, an initial viewing orientation timed metadata track is identified based on a second sample entry type, the initial viewing orientation timed metadata track indicating an initial viewing orientation when the omnidirectional video track is played.

In other words, the initial viewing orientation timed metadata track has a second sample entry type, and when an initial viewing orientation timed metadata track is identified based on the second sample entry type, a recommended initial viewing orientation may be obtained based on the initial viewing orientation timed metadata track.

In some examples, the second sample entry type is 'invo'.

Specifically, the initial viewing orientation timed metadata track indicates an initial viewing orientation that should be used when playing an associated media track. The sample entry type of the initial viewing orientation timed metadata track is 'invo', inherited from sphere region sample entry (SphereRegionSampleEntry), wherein shape type (shape type), dynamic range flag (dynamic range flag), static azimuth range (static_azimuth range), and static elevation range (static_elevation range) in sphere region config box (SphereRegionConfigBox) should all be 0.

The sample format of the initial viewing orientation timed metadata track is extended from the format of Sphere Region Sample, and defined as below:

```
     InitialViewingOrientation
     class InitialViewingOrientationSample() extends SphereRegionSample() {
    unsigned int(1) refresh flag;
    bit(7) reserved = 0;
 }
     aligned(8) SphereRegionSample() {
    for (i = 0; i < num_regions; i++)
        SphereRegionStruct(dynamic_range _flag)
 }aligned(8) SphereRegionStruct(range_included_flag){
    signed int(32) centre_azimuth;
    signed int(32) centre_elevation;
    signed int(32) centre_tilt;
    if (range_included_flag){
        unsigned int(32) azimuth range;
        unsigned int(32) elevation range;
    }
    unsigned int(1) interpolate;
    bit(7) reserved = 0;
 }
```

center_azimuth, center_elevation, and center_tilt specify a viewing orientation relative to the global coordinate system. In that, center_azimuth and center_elevation represent a center of the viewing viewport, and center_tilt represents a tilt angle of the viewing viewport. In a case where centre_azimuth, centre_elevation and centre tilt are all equal to 0, it indicates the initial viewing orientation under a default condition;
refresh flag, in a case of being equal to 0, indicates that an indicated viewing orientation should be used when starting to play a sample in the associated media track, and in a case of being equal to 1, indicates that the indicated viewing orientation should always be used when starting to play or continuously play samples in the associated media track.

FIG. 6 is a schematic diagram of a common reference coordinate system according to an embodiment of the disclosure. As shown in FIG. 6, there is a global coordinate system for each viewpoint in the viewpoint group including viewpoint A, viewpoint B, and viewpoint C. The global coordinate system includes a unit sphere and X, Y, Z coordinate axes. In contrast, the common reference coordinate system is a global coordinate system of a selected viewpoint in the viewpoint group, and the unit sphere and coordinate axes of the global coordinate system are used as reference. For example, the viewpoint A in FIG. 6 serves as a common reference coordinate system for the viewpoint group. It should be noted that the common reference coordinate system may be pre-specified manually, or may be determined based on the association between multiple viewpoints. Apparently, other determination methods also fall within the scope of the present disclosure.

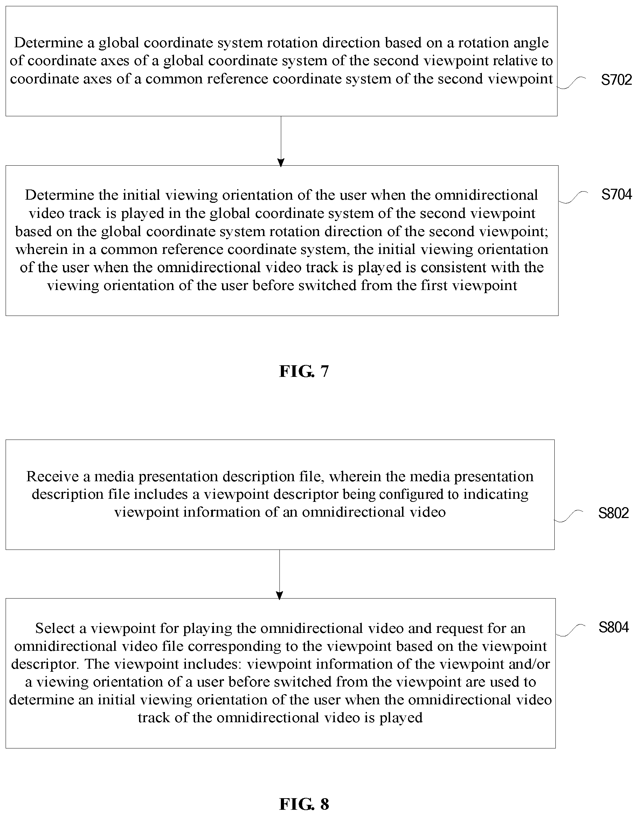

FIG. 7 is a schematic diagram of still another video data processing method according to an embodiment of the disclosure. As shown in FIG. 7, the flow includes the following steps S702 and S704.

At step S702, determining a global coordinate system rotation direction of the second viewpoint based on a rotation angle of coordinate axes of a global coordinate system relative to coordinate axes of a common reference coordinate system of the second viewpoint.

At step S704, determining the initial viewing orientation of the user when the omnidirectional video track is played in the global coordinate system of the second viewpoint based on the global coordinate system rotation direction of the second viewpoint; wherein in a common reference coordinate system, the initial viewing orientation of the user when the omnidirectional video track is played is consistent with the viewing orientation of the user before switched from the first viewpoint.

Specifically, the rotation angle includes at least one of: yaw, pitch and roll angles.

In some examples, the second viewpoint is determined based on an initial viewpoint identity in an initial viewpoint timed metadata track; or a viewpoint with the least value of viewpoint identity among all the switched viewpoints is selected as the second viewpoint.

In some examples, the initial viewpoint timed metadata track is identified based on a third sample entry type, the initial viewpoint timed metadata track indicating an initial viewpoint identity.

In other words, the initial viewpoint timed metadata track has a third sample entry type, and when an initial viewpoint timed metadata track is identified based on the third sample entry type, the second viewpoint is determined based on an initial viewpoint identity in the initial viewpoint timed metadata track.

In some examples, the third sample entry type is 'invp'.

It should be noted that the use of the initial viewpoint timed metadata track is indicated by the track sample entry type. The sample entry type of the initial viewpoint timed metadata track is 'invp', and defined as follows:

```
     class InitialViewpointSampleEntry extends
     MetaDataSampleEntry('invp') {
     unsigned int(16) initial_viewpoint_id;
 }
```

initial viewpoint id represents a viewpoint identity value of the first sample referencing the sample entry.

The initial viewpoint timed metadata track sample format is explained below with reference to optional implementations.

```
     aligned(8) InitialViewpointSample() {
     unsigned int(16) initial_viewpoint_id;
 }
```

initial viewpoint id indicates a viewpoint identity value of the initial viewpoint of the timed metadata track sample.

Through the above steps, the problem that the user may feel uncomfortable due to a sudden change of contents in the viewports before and after the viewpoint switched in the related art is solved, achieving the effect of improving viewing experience of the user.

Through the description of the above implementations, those having ordinary skill in the art can clearly understand that the method according to the above embodiment may be implemented by means of software plus a necessary general hardware platform. Obviously, it may also be implemented by hardware, but in most cases, the former is preferable. Based on such understanding, the technical solutions of the present invention essentially or, in other words, a part thereof contributing to the prior art, can be embodied in a form of a software product, wherein the software product is stored in a storage medium (such as an ROM/RAM, a disk, or an optical disc) and includes a number of instructions to make a terminal device (which may be a mobile phone, a computer, a server, or a network device, etc.) to execute the methods of the various embodiments of the present disclosure.

### Embodiment 2

In this embodiment, there is provided a video data transmission method run on the above mobile terminal; what has been explained will not be repeated. FIG. 8 is a flowchart of a video data transmission method according to an embodiment of the present disclosure. As shown in FIG. 8, the flow includes the following steps S802 and S804.

At step S802, receiving a media presentation description file, wherein the media presentation description file includes a viewpoint descriptor being configured to indicate viewpoint information of an omnidirectional video.

At step S804, selecting a viewpoint for playing the omnidirectional video and requesting for an omnidirectional video file corresponding to the viewpoint based on the viewpoint descriptor.

Wherein, viewpoint information of the viewpoint and /or a viewing orientation of a user before switched from the viewpoint are used to determine an initial viewing orientation of the user when the omnidirectional video track of the omnidirectional video is played.

In Media Presentation Description (MPD) of Dynamic Adaptive Streaming over HTTP (DASH), the viewport element with scheme identity attribute (@schemeIdUri) equal to "urn: mpeg: mpegI: omaf: 2018: vwpt"is called VWPT descriptor.

The VWPT descriptor indicates a viewpoint point corresponding to an Adaptation Set including the VWPT descriptor. The VWPT descriptor should not appear at other levels than the Adaptation Set, and there is at most one VWPT descriptor in the Adaptation Set. If the VWPT descriptor is not present, the media presentation contains only one viewpoint.

As shown in Table 3, a table for describing attribute semantics of the viewpoint descriptor element is provided.

**Table 3**

| View descriptor element and attribute | Use | Data type | Description |
|---|---|---|---|
| @value | M | | Indicate viewpoint_id of a viewpoint |
| ViewPointInfo | 1 | omaf2:View PointInfoTy pe | A container element, whose child element and attribute provide viewpoint information of the viewpoint specified by @value. |
| ViewPointInfo.Po sition | 1 | omaf2:View pointPositio nType | Attribute of this element provides positional information of the viewpoint specified by @value. |
| ViewPointInfo.Po sition@x | 0,1 | xs:int | Specify an X-axis coordinate position (in 1/10 mm) of the viewpoint in a 3D space with (0, 0, 0) as the center in the common reference coordinate system. If the viewpoint is associated with a dynamic viewpoint timed metadata representation, this attribute specifies an X-axis coordinate position of an initial viewpoint of the viewpoint, and otherwise, the attribute specifies an X-axis coordinate position of a static viewpoint. |
| ViewPointInfo.Po sition@y | 0,1 | xs:int | Specify a Y-axis coordinate position (in 1/10 mm) of the viewpoint in a 3D space with (0, 0, 0) as the center in the common reference coordinate system. If the viewpoint is associated with a dynamic viewpoint timed metadata representation, this attribute specifies a Y-axis coordinate position of an initial viewpoint of the viewpoint, and otherwise, the attribute specifies a Y-axis coordinate position of a static viewpoint. |
| ViewPointInfo.Po sition@z | 0,1 | xs:int | Specify a Z-axis coordinate position (in 1/10 mm) of the viewpoint in a 3D space with (0, 0, 0) as the center of the common reference coordinate system. If the viewpoint is associated with a dynamic viewpoint timed metadata representation, this attribute specifies a Z-axis coordinate position of an initial viewpoint of the viewpoint, and otherwise, the attribute specifies a Z-axis coordinate position of a static viewpoint. |
| ViewPointInfo.gp s | 0,1 | | A container element, whose attribute provides a GPS position of the viewpoint specified by @value. |
| ViewPointInfo.gp s@longitude | M | | A longitude value in units of 2⁻²³ degrees for a geographic position of the viewpoint. The longitude should be in the range of -180 ^{∗} 2²³ to 180 ^{∗} 2²³ -1. |
| ViewPointInfo.gp s@latitude | M | | A latitude value in units of 2⁻²³ degrees for a geographic position of the viewpoint. The latitude should be in the range of -90 ^{∗} 2²³ to 90 ^{∗} 2²³ -1. |
| ViewPointInfo.gp s@altitude | M | | An elevation value in mm for a geographic position of the viewpoint. |
| ViewPointInfo@i nitialViewpoint | 0,1 | xs:boolean | If true, the attribute specifies that the viewpoint is the initial viewpoint of all viewpoints in the current period. If false, the attribute specifies that the viewpoint is not the initial viewpoint in the current period. At most one viewpoint has the @initialViewpoint attribute equal to true in one period. If no viewpoint has the @initialViewpoint attribute equal to true in the period, or if the @ initialViewpoint attribute does not exist, the initial viewpoint is specified by an associated initial viewpoint timed metadata representation. |
| ViewPointInfo. ViewPointGroup | 0,1 | omaf2:View pointGroup Type | A container element, whose attribute provides a viewpoint group of the viewpoint specified by @value. |
| ViewPointInfo.Vi ewPointGroup@g roup_id | 0,1 | xs:unsigned Byte | A unsigned integer value represents an identity of a viewpoint group, in which all viewpoints share a common reference coordinate system |
| ViewPointInfo.Vi ewPointGroup@ group_description | 0,1 | xs: string | A null-terminated UTF-8 character string, provides description of a viewpoint group. |
| ViewPointInfo@1 abel | 0,1 | xs:string | Represents a label of a viewpoint, and is a null-terminated UTF-8 character string that provides text description of the viewpoint corresponding to the track group. |
| Legend: | | | |
| M=Mandatory, O=Optional | | | |

In some examples, the step of requesting for the omnidirectional video file corresponding to the viewpoint based on the viewpoint descriptor includes: requesting, when the selected viewpoint is a dynamic viewpoint, for a dynamic viewpoint timed metadata file associated with the omnidirectional video file corresponding to the viewpoint.

In some examples, the step of requesting for the omnidirectional video file corresponding to the viewpoint based on the viewpoint descriptor further includes: determining a viewpoint group for playing the omnidirectional video; requesting, when an initial viewpoint is present in the viewpoint group, for an omnidirectional video file corresponding to the initial viewpoint; and requesting, when no initial viewpoint is present in the viewpoint group, for a omnidirectional video file with the least value of viewpoint identity in the viewpoint group.

In some examples, the method further includes: judging whether an initial viewpoint is present in the viewpoint group based on an initial viewpoint flag bit and a viewpoint group identity carried by the viewpoint descriptor, or requesting for initial viewpoint timed metadata files associated with all viewpoints; and judging whether an initial viewpoint is present in the viewpoint group based on an initial viewpoint identity indicated in the initial viewpoint timed metadata file, the initial viewpoint flag bit and the viewpoint group identity.

In some examples, the viewpoint descriptor is identified based on a URI attribute in the media presentation description file, and the viewpoint information of the omnidirectional video indicated by the viewpoint descriptor includes at least one of: a 3D space position of a viewpoint, a GPS position of a viewpoint, a global coordinate system rotation direction of a viewpoint, a group corresponding to a viewpoint, an identity of a viewpoint, a label of a viewpoint, and a type of a viewpoint.

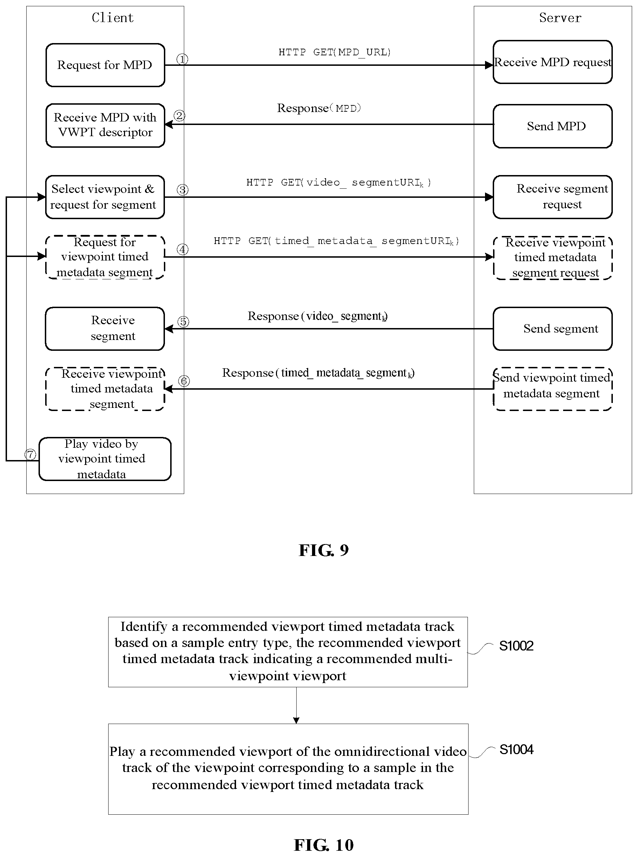

To better understand the technical solution described in this embodiment, in an embodiment of the embodiment, there is further provided a flowchart of an omnidirectional video data transmission method. FIG. 9 is a flowchart of an omnidirectional video data transmission method according to an embodiment of the disclosure. As shown in FIG. 9, the flow includes the following steps 1 to 7.

At step 1, a client sends a request (a HTTP GET message) for a MPD file to a server, wherein the request carries a URL address of the MPD file.

At step 2, the server returns the MPD file (a HTTP 200 response message) to the client, wherein the MPD file includes a viewpoint descriptor (VWPT Descriptor) indicating viewpoint information of the video file.

At step 3, the client selects a viewpoint, a video code rate, decoding parameters and other information of the video requested to be played according to the received MPD file. The client sends a request (a HTTP GET message) for a video segment to the server according to the viewpoint descriptor in the MPD file, wherein the request carries a URL address of the video segment.

At step 4, optionally, the client sends a request (a HTTP GET message) for a timed metadata (Metadata Segment) to the server, wherein the request carries a URL address of the timed metadata file.

At step 5, the server returns a video segment file (a HTTP 200 response message) to the client, wherein the video segment file corresponds to the viewpoint for video playing selected by the client in step 3.

At step 6, optionally, the server returns a timed metadata file (a HTTP 200 response message) to the client, wherein the timed metadata file corresponds to the timed metadata requested by the client in step 4.

At step 7, the client plays the received video file corresponding to the viewpoint locally.

Specifically, in the MPD file, the video file of the selected viewpoint is associated with a timed metadata representation of a dynamic viewpoint timed metadata track carrying a sample entry type of 'dyvp', i.e. the position of the viewpoint is dynamic. Then, the aforementioned request for the timed metadata (the HTTP GET message) is a dynamic viewpoint timed metadata acquisition request, and the client requests to acquire dynamic viewpoint timed metadata including a dynamic position of a video file viewpoint. When the global coordinate system of the dynamic viewpoint is rotated, the client player plays the video file according to the viewing orientation of the user when the dynamic viewpoint changes and a rotation direction of the global coordinate system of the dynamic viewpoint. When the viewpoint group of the dynamic viewpoint is changed, the client player plays the video file according to the recommended initial viewing orientation.

Specifically, in the MPD file, the selected viewpoint is associated with a timed metadata representation of an initial viewpoint timed metadata track carrying a sample entry type of 'invp', i.e., an initial viewpoint is present. Then, the aforementioned request for the timed metadata (the HTTP GET message) is an initial viewpoint timed metadata acquisition request, and the client requests for the initial viewpoint timed metadata containing the initial viewpoint identity. When the viewpoints are switched among different viewpoint groups, the client requests for the video file corresponding to the initial viewpoint in step 3, and the client player plays the video file according to the recommended initial viewing orientation.

### Embodiment 3

In this embodiment, there is provided a video data processing method run on the above mobile terminal; what has been explained will not be repeated. FIG. 10 is a flowchart of a video data processing method according to an embodiment of the present disclosure. As shown in FIG. 10, the flow includes the following steps S1002 and S1004.

At step S1002, identifying a recommended viewport timed metadata track based on a sample entry type, the recommended viewport timed metadata track indicating a multi-viewpoint recommended viewport.

At step S1004, playing a recommended viewport of the omnidirectional video track of the viewpoint corresponding to a sample in the recommended viewport timed metadata track.

In some examples, the viewpoint corresponding to the sample in the recommended viewport timed metadata track is determined based on a sample group box.

In some examples, a sample group box in the recommended viewport timed metadata track and its corresponding sample group description box are identified based on a group type, wherein a sample group entry of the sample group description box includes a viewpoint identity corresponding to a sample in the recommended viewport timed metadata track.

In some examples, a sample entry of the recommended viewport timed metadata track includes a recommended viewport information box, and a first viewpoint identity of the sample in the recommended viewport timed metadata track.

In some examples, if the sample in the recommended viewport timed metadata track corresponds to a viewpoint different from the first viewpoint, the sample of the recommended viewport timed metadata track includes a second viewpoint identity.

In some examples, the viewpoint group box is identified based on a track group type, and the viewpoint group box contains viewpoint information of the omnidirectional video track; and a viewpoint corresponding to the omnidirectional video track is determined based on the viewpoint group box.

Specifically, a sample entry of the recommended viewport timed metadata track supporting multiple viewpoints includes an initial viewpoint identity and a recommended viewport information box, and has recommended viewport syntax elements. The sample entry type of the recommended viewport timed metadata track is 'dyvp', and defined as follows:

```
     class RcvpSampleEntry() extends SphereRegionSampleEntry('rcvp', version) {
    if (version == 1) {
         unsigned int(16) initial_viewpoint_id;
    }
    RcvpInfoBox();
 }
    class RcvpInfoBox extends FullBox('rvif, 0, 0) {
    unsigned int(8) viewport_type;
    string viewport_description;
 }
```

version indicates an integer value of a sample format version;
initial viewpoint id represents an initial viewpoint identity of the first sample referencing the timed metadata track sample entry;
viewport_type represents a type of the recommended viewport, as shown in Table 4:

**Table 4**

| Value | Description |
|---|---|
| 0 | Recommended viewport of director's cut, i.e., a recommended viewport based on the creative intention of the content author or content provider |
| 1 | Recommended viewport based on viewing, statistics and measurements |
| 2-239 | Reserved |
| 240-255 | Undefined |

viewport description is a null-terminated UTF-8 character string that provides text description of the recommended viewport.

The recommended viewport timed metadata track sample format inherits the sphere region sample syntax. The sphere region position of the recommended viewport and the viewpoint identity (if viewpoint switching occurs) corresponding to the timed metadata track sample (and its referenced media track sample) indicated by each sample in the track, are defined as below:

```
    aligned(8) SphereRegionSample() {
    unsigned int(1) viewpoint_switch_flag;
    if (viewpoint_switch_flag == 1){
           unsigned int(16) viewpoint_id;
    }
    for (i = 0; i < num_regions; i++)
           SphereRegionStruct(dynamic_range_flag)
 }
```

viewpoint_switch_flag, in a case of being equal to 0, indicates that the viewpoint corresponding to the timed metadata track sample (and its referenced media track sample) is the initial viewpoint, and in a case of being equal to 1, indicates that the viewpoint corresponding to the timed metadata track sample (and its referenced media track sample) different from the initial viewpoint; and
viewpoint_id, in a case of being equal to 1, indicates a viewpoint identity corresponding to the timed metadata track sample (and its referenced media track sample) different from a viewpoint identity of the initial viewpoint.

In some examples, the viewpoint corresponding to the sample in the recommended viewport timed metadata track is determined based on a sample group box.

In some examples, a sample group box in the recommended viewport timed metadata track and its corresponding sample group description box are identified based on a group type, wherein a sample group entry of the sample group description box includes a viewpoint identity corresponding to a sample in the recommended viewport timed metadata track. In some examples, a recommended viewport timed metadata track with a sample entry type of 'rcvp' may contain 0 or 1 sample group box (SampleGroupBox) with a grouping type (grouping_type) of 'vwpt', so as to indicate the viewpoint corresponding to a sample in the timed metadata track (and its referenced media track sample).

A sample group box with a grouping type of 'vwpt' in the recommended viewport timed metadata track supporting multiple viewpoints, and its corresponding sample group description box, are explained below with reference to optional implementations.

The sample group box classifies samples in the timed metadata track (and its referenced media track) into different sample groups, and a viewpoint sample group entry (SampleGroupEntry) in the sample group description box contains viewpoint identities corresponding to different sample groups.

The sample group entry with a grouping type of 'vwpt' in the sample group description box, i.e., viewpoint sample group entry (ViewpointSampleGroupEntry), is defined as follows:

```
      class ViewpointSampleGroupEntry () extends
      SampleGroupDescriptionEntry('vwpt') {
         unsigned int(32) viewpoint_id;
      }
```

viewpoint_id indicates a viewpoint identity corresponding to a sample group in the timed metadata track (and its referenced media track sample). The value should be equal to track group id of the omnidirectional video viewpoint group box with the track group type of 'vwpt'.

### Embodiment 4

In this embodiment, there is further provided a video data processing apparatus for implementing the above embodiments and preferred implementations; what has been explained will not be repeated. As used herein, the term "module" may be a combination of software and /or hardware that can realize a preset function. The apparatus described in the following embodiments is preferably implemented in software, but hardware, or a combination of software and hardware, is also possible and contemplated.

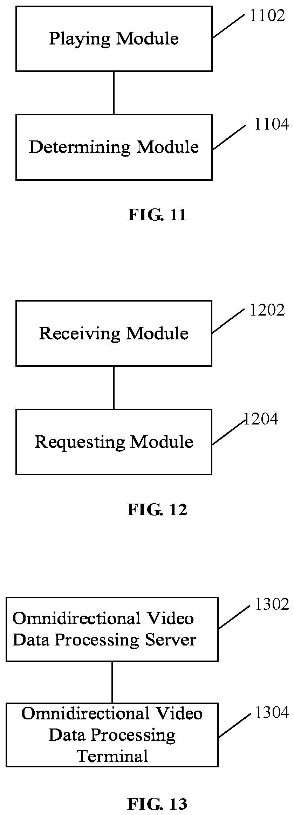

FIG. 11 is a structural block diagram of a video data processing apparatus according to an embodiment of the present disclosure. As shown in FIG. 11, the apparatus includes: a playing module 1102 and a determining module 1104.

The playing module 1102 is configured to play an omnidirectional video track of a second viewpoint switched from a first viewpoint.

The determining module 1104 is configured to determine, according to viewpoint information of the second viewpoint and /or a viewing orientation of a user after switched to the second viewpoint, an initial viewing orientation of the user when the omnidirectional video track is played.

In some examples, the determining module 1104 is further configured to play, when an initial viewing orientation is present, the omnidirectional video track according to the initial viewing orientation; and play, when an initial viewing orientation is absent, the omnidirectional video track according to a default viewing orientation of the user, or play the omnidirectional video track according to the viewing orientation of the user when switched to the second viewpoint.

In some examples, the determining module 1104 is further configured to determine a global coordinate system rotation direction of the second viewpoint based on a rotation angle of coordinate axes of a global coordinate system relative to coordinate axes of a common reference coordinate system of the second viewpoint.

In some examples, the determining module 1104 is further configured to determine an initial viewing orientation of the user when the omnidirectional video track is played in the global coordinate system of the second viewpoint based on the global coordinate system rotation direction of the second viewpoint; wherein in the common reference coordinate system, the initial viewing orientation of the user when the omnidirectional video track is played is consistent with the viewing orientation of the user before switched from the first viewpoint.

### Embodiment 5

In this embodiment, there is further provided a video data processing apparatus for implementing the above embodiments and preferred implementations; what has been explained will not be repeated. As used herein, the term "module" may be a combination of software and /or hardware that can realize a preset function. The apparatus described in the following embodiments is preferably implemented in software, but hardware, or a combination of software and hardware, is also possible and contemplated.

FIG. 12 is a structural block diagram of a video data transmission apparatus according to an embodiment of the present disclosure. As shown in FIG. 12, the apparatus includes: a receiving module 1202 and a requesting module 1204.

The receiving module 1202 is configured to receive a media presentation description file, wherein the media presentation description file includes a viewpoint descriptor for indicating viewpoint information of an omnidirectional video.

The requesting module 1204 is configured to select a viewpoint for playing the omnidirectional video and request for an omnidirectional video file corresponding to the viewpoint based on the viewpoint descriptor.

The viewpoint includes: a viewpoint of an omnidirectional video track in the omnidirectional video file, and viewpoint information of the viewpoint and /or a viewing orientation of a user before switched from the viewpoint are used to determine an initial viewing orientation of the user when the omnidirectional video track is played of the omnidirectional video.

In some examples, the requesting module 1204 is further configured to request, when the selected viewpoint is a dynamic viewpoint, for a dynamic viewpoint timed metadata file associated with the omnidirectional video file corresponding to the viewpoint.

In some examples, the requesting module 1204 is further configured to determine a viewpoint group for playing the omnidirectional video; request, in a case where an initial viewpoint is present in the viewpoint group, for an omnidirectional video file corresponding to the initial viewpoint; and request, in a case where no initial viewpoint is present in the viewpoint group, for a omnidirectional video file with the least value of viewpoint identity in the viewpoint group.

### Embodiment 6

In this embodiment, there is further provided a video data processing system for implementing the above embodiments and preferred implementations; what has been explained will not be repeated.

FIG. 13 is a structural block diagram of a video data processing system according to an embodiment of the present disclosure. As shown in FIG. 13, the processing system includes: an omnidirectional video data processing server 1302, and an omnidirectional video data processing terminal 1304.

The omnidirectional video data processing server 1302 is configured to produce the omnidirectional video collected from a plurality of viewpoints, generate viewpoint information of the omnidirectional video, and encapsulate the viewpoint information of the omnidirectional video in one or more media files or one or more pieces of index information.

The omnidirectional video data processing terminal 1304 is configured to transmit the omnidirectional video, decapsulate the omnidirectional video to extract viewpoint information of the plurality of viewpoints, and play a processed omnidirectional video.

In some examples, the media file at least includes one of: an omnidirectional video track of the omnidirectional video, and a timed metadata track; the index information at least includes: a media presentation description file.

In some examples, the viewpoint information at least includes: viewpoint metadata; the media presentation description file at least includes: a viewpoint descriptor for indicating viewpoint information of an omnidirectional video.

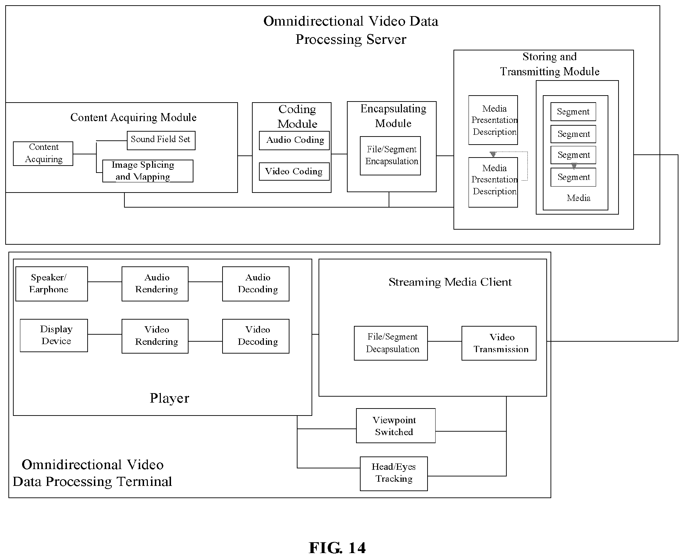

FIG. 14 is a structural block diagram of another video data processing system according to an embodiment of the present disclosure. As shown in FIG. 14, the processing system is applied in the omnidirectional video data processing server and the omnidirectional video data processing terminal as described above.

As shown in FIGS. 13 and 14, the omnidirectional video data processing server 1302 includes a content acquiring module, a coding module, an encapsulating module and a storing and transmitting module.

The content acquiring module is configured to implement recording of a sound-visual scene of the real physical world using a group of cameras or a camera device with a plurality of cameras and sensors and an audio sensor. Video images taken by different cameras at the same time are spliced into an omnidirectional video and projected on a unit sphere. In this process, an omnidirectional video collected from different viewpoints is manufactured and formed, and corresponding omnidirectional video viewpoint metadata are generated, which at least includes: a viewpoint identity, a viewpoint type, a viewpoint position (a static location, a dynamic location), viewpoint description, etc.

The coding module is configured to code and compress digital video signals and audio signals output by the content acquiring module, and typically generate audio and video elementary streams with multiple code rates to cover different network bandwidth requirements.

The encapsulating module is configured to encapsulate the original audio and video elementary streams into a plurality of media segments by fixed time intervals, and provide index information of the media segments. The index information includes: a Media Presentation Description (MPD) file of Dynamic Adaptive Streaming over HTTP (DASH), or a media description file (M3U8) based on HTTP Live Streaming (HLS) protocol.

The encapsulating module is further configured to add the omnidirectional video viewpoint metadata generated by the content acquiring module into one or more media files which include: different versions of omnidirectional video tracks or timed metadata tracks. The encapsulating module is further configured to add the omnidirectional video viewpoint metadata generated by the content acquiring module into one or more pieces of index information such as: media presentation description files.

The storing and transmission module is configured to store the media segments output by the encapsulating module and index information of the media segments. The storing and transmitting module may be any suitable type of network servers, such as a center node of a Content Delivery Network (CDN), or edge node server, or a proxy server, or a World Wide Web (Web) server, or a combination thereof.

The omnidirectional video data processing terminal 1304 includes a streaming media client and a player.

The streaming media client is configured to implement transmission of the omnidirectional video, such as: a DASH client, or an HLS client, configured to analyze the index information of the media segments and request for the corresponding media segment according to a posture change in the viewing angle of the user.

The streaming media client is further configured to decapsulate the omnidirectional video file to extract omnidirectional video viewpoint metadata, including: analyzing the viewpoint track group box in the omnidirectional video track to obtain an identity and a position of a viewpoint corresponding to the omnidirectional video; analyzing the dynamic viewpoint timed metadata track to obtain an identity and a position of the dynamic viewpoint corresponding to the omnidirectional video; and analyzing the recommended viewport timed metadata track to obtain identities of a plurality of different viewpoints corresponding to the omnidirectional video.

The player is configured to implement decoding, caching and playing of the omnidirectional video, such as: a head mounted display (HMD), which capable of tracking pose changes in the viewing angle of the user, and magnifying a miniature display screen image through a visual optical system located in front of the user's eyes to provide an omnidirectional video immersive presentation effect.

### Embodiment 7

In an embodiment of the present disclosure, there is further provided a storage medium, the storage medium having a computer program stored thereon, wherein the computer program is configured to be executed to cause steps of any one of the above method embodiments to be implemented.

In some examples, in this embodiment, the storage medium may be configured to store a computer program for implementing the steps of:
S1, playing an omnidirectional video track of a second viewpoint switched from a first viewpoint;
S2, determining, according to viewpoint information of the second viewpoint and /or a viewing orientation of a user before switched from the first viewpoint, an initial viewing orientation of the user when the omnidirectional video track is played.

In some examples, the storage medium is further configured to store a computer program for implementing the steps of:
S3, receiving a media presentation description file, wherein the media presentation description file includes a viewpoint descriptor being configured to indicate viewpoint information of an omnidirectional video; and
S4, selecting a viewpoint for playing the omnidirectional video and requesting for an omnidirectional video file corresponding to the viewpoint based on the viewpoint descriptor.

In some examples, in this embodiment, the storage medium may include, but is not limited to: a U disk, a Read-Only Memory (ROM), a Random Access Memory (RAM), a mobile hard disk, a disk or optical disk, and other media that can store a computer program.

In an embodiment of the present disclosure, there is further provided an electronic apparatus, including a memory and a processor. The memory has a computer program stored thereon, and the processor is configured to execute the computer program to perform steps of any of the method embodiments as described above.

In some examples, the electronic apparatus may further include a transmission device and an input-output device, wherein the transmission device is connected to the processor, and the input-output device is connected to the processor.

In some examples, the storage medium is further configured to store a computer program for implementing the steps of:
S3, receiving a media presentation description file, wherein the media presentation description file includes a viewpoint descriptor being configured to indicate viewpoint information of an omnidirectional video; and
S4, selecting a viewpoint for playing the omnidirectional video and requesting for an omnidirectional video file corresponding to the viewpoint based on the viewpoint descriptor.

Specific examples in the present embodiment may refer to the examples described in the foregoing embodiments and optional implementations, which will not be repeated in the present embodiment.

Obviously, those having ordinary skill in the art would understand that the above modules and steps of the present disclosure can be realized by using a universal computing device, can be integrated in a single computing device or distributed on a network that consists of a plurality of computing devices; and alternatively, they can be realized by using the executable program code of the computing device, so that they can be stored in a storage device and executed by the computing device, in some cases, can perform the shown or described steps in a sequence other than herein, or they are made into various integrated circuit modules respectively, or a plurality of modules or steps thereof are made into a single integrated circuit module, thus to be realized. In this way, the present disclosure is not restricted to any particular hardware and software combination.

The descriptions above are only the preferred embodiments of the present disclosure, which are not used to restrict the present disclosure. For those having ordinary skill in the art, the present disclosure may have various changes and variations. Any modification, equivalent replacement, improvement and the like made within the principle of the present disclosure should be included in the protection scope of the present disclosure.

## Claims

1. A video data processing method, comprising:
playing an omnidirectional video track of a second viewpoint switched from a first viewpoint; and
determining, according to viewpoint information of the second viewpoint and /or a viewing orientation of a user before switched from the first viewpoint, an initial viewing orientation of the user when the omnidirectional video track is played.

2. The method according to claim 1, further comprising:
determining the viewpoint information of the second viewpoint based on a viewpoint group box in the omnidirectional video track.

3. The method according to claim 2, further comprising:
identifying the viewpoint group box in the omnidirectional video track based on a specified track group type; wherein viewpoint group boxes of omnidirectional video tracks belonging to the same viewpoint have the same track group identity.

4. The method according to any one of claims 1 to 3, further comprising:
determining the viewpoint information of the second viewpoint based on a dynamic viewpoint timed metadata track.

5. The method according to claim 4, further comprising:
identifying the dynamic viewpoint timed metadata track based on a first sample entry type, the dynamic viewpoint timed metadata track indicating dynamically changing viewpoint information of the omnidirectional video track.

6. The method according to any one of claims 1 to 5, wherein the viewpoint information of the second viewpoint includes at least one of: a 3D space position of a viewpoint, a GPS position of a viewpoint, a global coordinate system rotation direction of a viewpoint, a viewpoint group, an identity of a viewpoint, a label of a viewpoint, and a type of a viewpoint.

7. The method according to claim 1, further comprising:
playing, in a case where the initial viewing orientation is present, the omnidirectional video track according to the initial viewing orientation; otherwise, playing, according to the viewing orientation of the user before switched from the first viewpoint, the omnidirectional video track.

8. The method according to claim 7, further comprising:
identifying an initial viewing orientation timed metadata track based on a second sample entry type, the initial viewing orientation timed metadata track indicating the initial viewing orientation when the omnidirectional video track is played.

9. The method according to claim 6 or 7, further comprising:
determining a global coordinate system rotation direction of the second viewpoint based on a rotation angle of coordinate axes of a global coordinate system relative to coordinate axes of a common reference coordinate system of the second viewpoint.

10. The method according to claim 9, wherein the step of determining, according to the viewpoint information of the second viewpoint and /or the viewing orientation of the user before switched from the first viewpoint, the initial viewing orientation of the user when the omnidirectional video track is played comprises:
determining the initial viewing orientation of the user when the omnidirectional video track is played in the global coordinate system of the second viewpoint based on the global coordinate system rotation direction of the second viewpoint;
wherein in the common reference coordinate system, the initial viewing orientation of the user when the omnidirectional video track is played is consistent with the viewing orientation of the user before switched from the first viewpoint.

11. The method according to claim 1, wherein the step of playing the omnidirectional video track of the second viewpoint switched from the first viewpoint further comprises:
determining the second viewpoint based on an initial viewpoint identity in an initial viewpoint timed metadata track; or selecting a viewpoint with the least value of viewpoint identity among all the switched viewpoints as the second viewpoint.

12. The method according to claim 11, further comprising:
identifying the initial viewpoint timed metadata track based on a third sample entry type, the initial viewpoint timed metadata track indicating an initial viewpoint identity.

13. A video data transmission method, comprising:
receiving a media presentation description file, wherein the media presentation description file includes a viewpoint descriptor being configured to indicate viewpoint information of an omnidirectional video; and
selecting a viewpoint for playing the omnidirectional video and requesting for an omnidirectional video file corresponding to the viewpoint based on the viewpoint descriptor;
wherein the viewpoint information of the viewpoint and /or a viewing orientation of a user before the viewpoint switched is configured to determine an initial viewing orientation of the user when the omnidirectional video track of the omnidirectional video is played.

14. The method according to claim 13, wherein the step of requesting for the omnidirectional video file corresponding to the viewpoint based on the viewpoint descriptor comprises:
requesting, when the selected viewpoint is a dynamic viewpoint, for a dynamic viewpoint timed metadata file associated with the omnidirectional video file corresponding to the viewpoint.

15. The method according to claim 13, wherein the step of requesting for the omnidirectional video file corresponding to the viewpoint based on the viewpoint descriptor further comprises:
determining a viewpoint group for playing the omnidirectional video; and
requesting, in a case where an initial viewpoint is present in the viewpoint group, for an omnidirectional video file corresponding to the initial viewpoint; and requesting, in a case where no initial viewpoint is present in the viewpoint group, for an omnidirectional video file with the least value of viewpoint identity in the viewpoint group.

16. The method according to claim 14, further comprising:
judging whether an initial viewpoint is present in the viewpoint group based on an initial viewpoint flag bit and a viewpoint group identity carried by the viewpoint descriptor,
or requesting for initial viewpoint timed metadata files associated with all viewpoints; and judging whether an initial viewpoint is present in the viewpoint group based on an initial viewpoint identity indicated in the initial viewpoint timed metadata file, the initial viewpoint flag bit and the viewpoint group identity.

17. The method according to any one of claims 13 to 16, wherein
the viewpoint descriptor is identified based on a URI attribute in the media presentation description file, and the viewpoint information of the omnidirectional video indicated by the viewpoint descriptor comprises at least one of: a 3D space position of a viewpoint, a GPS position of a viewpoint, a global coordinate system rotation direction of a viewpoint, a group corresponding to a viewpoint, an identity of a viewpoint, a label of a viewpoint, and a type of a viewpoint.

18. A video data processing apparatus, comprising:
a playing module, configured to play an omnidirectional video track of a second viewpoint switched from a first viewpoint; and
a determining module, configured to determine, according to viewpoint information of the second viewpoint and /or a viewing orientation of a user before switched from the first viewpoint, an initial viewing orientation of the user when the omnidirectional video track is played.

19. The apparatus according to claim 18, wherein the determining module is further configured to play, in a case where the initial viewing orientation is present, the omnidirectional video track according to the initial viewing orientation; and otherwise, play, according to the viewing orientation of the user before switched from the first viewpoint, the omnidirectional video track.

20. The apparatus according to claim 19, wherein the determining module is further configured to determine a global coordinate system rotation direction of the second viewpoint based on a rotation angle of coordinate axes of a global coordinate system relative to coordinate axes of a common reference coordinate system of the second viewpoint.

21. The apparatus according to claim 20, wherein the determining module is further configured to: determine the initial viewing orientation of the user when the omnidirectional video track is played in the global coordinate system of the second viewpoint based on the global coordinate system rotation direction of the second viewpoint; wherein in the common reference coordinate system, the initial viewing orientation of the user when the omnidirectional video track is played is consistent with the viewing orientation of the user before switched from the first viewpoint.

22. A video data transmission apparatus, comprising:
a receiving module, configured to receive a media presentation description file, wherein the media presentation description file includes a viewpoint descriptor being configured to indicate viewpoint information of an omnidirectional video; and
a requesting module, configured to select a viewpoint for playing the omnidirectional video and request for an omnidirectional video file corresponding to the viewpoint based on the viewpoint descriptor;
wherein viewpoint information of the viewpoint and /or a viewing orientation of a user before switched from the viewpoint are used to determine an initial viewing orientation of the user when the omnidirectional video track of the omnidirectional video is played.

23. The transmission apparatus according to claim 22, wherein the requesting module is further configured to request, when the selected viewpoint is a dynamic viewpoint, for a dynamic viewpoint timed metadata file associated with the omnidirectional video file corresponding to the viewpoint.

24. The transmission apparatus according to claim 23, wherein the requesting module is further configured to: determine a viewpoint group for playing the omnidirectional video; request, in a case where an initial viewpoint is present in the viewpoint group, for an omnidirectional video file corresponding to the initial viewpoint; and request, in a case where no initial viewpoint is present in the viewpoint group, for a omnidirectional video file with the least value of viewpoint identity in the viewpoint group.

25. A video data processing system, comprising: an omnidirectional video data processing server, and an omnidirectional video data processing terminal; wherein
the omnidirectional video data processing server is configured to produce the omnidirectional video collected from a plurality of viewpoints, generate viewpoint information of the omnidirectional video, and encapsulate the viewpoint information of the omnidirectional video in one or more media files or one or more pieces of index information; and
the omnidirectional video data processing terminal is configured to transmit the omnidirectional video, decapsulate the omnidirectional video to extract viewpoint information of the plurality of viewpoints, and play a processed omnidirectional video.

26. The processing system according to claim 25, wherein
the media file at least includes one of: an omnidirectional video track, and a timed metadata track; the index information at least comprises: a media presentation description file.

27. A storage medium, the storage medium having a computer program stored thereon, wherein the computer program is configured to be executed to cause the method according to any one of claims 1-12 and 13-17 to be implemented.

28. An electronic apparatus, comprising a memory and a processor, wherein the memory has a computer program stored thereon, and the processor is configured to execute the computer program to implement the method according to any one of claims 1-12 and 13-17.
